# EUROPÄISCHE PATENTSCHRIFT

(11) **EP 2 782 370 B1**
(45) Veröffentlichungstag und Bekanntmachung des Hinweises auf die Patenterteilung: **28.11.2018**
(21) Anmeldenummer: 13160608.9
(22) Anmeldetag: 22.03.2013
(51) Int. Cl.: H04W 4/12, H04M 1/2745, H04M 1/725

(54) **Verfahren zum einfachen Auslösen von voreingestellten Nachrichten an automatisch erkannte Empfänger über automatisch erkannte Kommunikationswege an einem mobilen Endgerät**
Method for the simple triggering of preset messages to automatically detected receivers via automatically detected communication paths on a mobile terminal
Procédé de déclenchement simple de nouvelles préréglées sur un récepteur détecté automatiquement via des voies de communication détectées automatiquement sur un terminal mobile

(43) Veröffentlichungstag der Anmeldung: 24.09.2014
(73) Patentinhaber: Deutsche Telekom AG, 53113 Bonn (DE)
(72) Erfinder: Saar, Eva, 64373 Griesheim (DE)
(74) Vertreter: 2K Patentanwälte Blasberg Kewitz & Reichel

(56) Entgegenhaltungen:
- EP-A2- 1 621 983
- US-A1- 2008 248 777
- US-A1- 2012 058 756
- US-B1- 7 644 144

## Beschreibung

Die Erfindung betrifft ein Verfahren und eine Vorrichtung zum einfachen Auslösen von voreingestellten Nachrichten an automatisch erkannte Empfänger über automatisch erkannte Kommunikationswege, die durch Kommunikationsanwendungen genutzt werden, die unterschiedliche Kommunikationsdienste auf einem mobilen Endgerät implementieren, wobei das mobile Endgerät eine Vielzahl von Kommunikationsanwendungen unterstützt

### Gebiet der Erfindung

Mit mobilen Endgeräten, insbesondere sogenannten Smartphones, kann auf unterschiedliche Arten mit anderen kommuniziert werden. Man kann telefonieren, SMS versenden, E-Mails versenden oder proprietäre Kommunikationswege von Anwendungen (sogenannte "Apps") verwenden. Kommunikationspartner müssen nicht immer Personen sein, sondern man kann auch Nachrichten bei Facebook oder Twitter hinterlassen.

Viele Anwender nutzen die Wartezeit auf einen Zug oder beim Arzt, um mit Hilfe ihres mobilen Endgeräts mit anderen zu kommunizieren. Dabei kommunizieren sie häufig gleichzeitig über verschiedene Wege mit verschiedenen Empfängern. Zum Beispiel tauscht ein Anwender mit einem Kommunikationspartner A E-Mails aus, während er gleichzeitig mit den Kommunikationspartnern B und C SMS austauscht, außerdem hinterlässt er Nachrichten bei einem Freund D auf Facebook.

Wenn die Wartezeit abrupt beendet wird, z. B. weil der Zug einfährt, muss der Anwender die Kommunikation plötzlich unterbrechen. Häufig hat er keine Zeit mehr, sich von seinem Kommunikationspartner zu verabschieden oder ihm mitzuteilen, dass er jetzt keine Zeit mehr hat. Dies ist insbesondere der Fall, wenn er gleichzeitig mit mehreren Kommunikationspartnern und über verschiedene Wege kommuniziert hat.

Die US 2008/24877 A1 stellen Verfahren bereit, bei dem über Nachrichtensymbole Nachrichten von einem mobilen Terminal an ein anderes mobiles Terminal gesendet werden. Die Erfindungwird insbesondere in Umgebungen verwendet, die durch eine hohe Lautstärke belastet sind.

Die EP 1 621 983 A2 offenbart ein Verfahren, um auf kurzfristig zugegriffene Nachrichten zuzugreifen. Eingehende und ausgehende Nachrichten werden einer entsprechenden Person bzw. einem Kontakt, der auf dem Gerät gespeichert ist, zugeordnet. Der Benutzer kann auf diese Kontaktliste zugreifen und dem Kontakt durch Verwendung eines wahlfreien Kommunikationsverfahren antworten, das bereitgestellt wird.

Die US 7 644 144 B1 zeigt ein Verfahren, bei denen Gruppen zusammen gestellt werden aufgrund von Kriterien, um dann einen entsprechende Kanal für den Austausch von Informationen bereitzustellen. Hierbei werden optimale Gruppen Kommunikationssätze bestimmt. Das Verfahren erleichtert einem Empfänger mit einer Gruppe zu kommunizieren, indem das Kommunikationssystem auf der Basis von Präferenzen und einem Kontext einer Gruppe optimiert wird, zu dem das Mitglied gehört.

Die US 2012/058756 A1 zeigt ein Verfahren, bei dem durch Drücken einer Besetzttaste ein Anruf automatisch beantwortet wird. Dies kann mit unterschiedlichen Tasten und Antworten erfolgen.

### Überblick über die Erfindung:

Aufgabe der Erfindung ist die Bereitstellung einer Möglichkeit, verschiedenen Kommunikationspartnern auf einfache Weise voreingestellte Nachrichten zu senden. Diese Nachrichten können auch der Status einer Kommunikationsverbindung sein. Der Status zeigt an, ob eine Person bereit ist zu kommunizieren oder nicht. Von vielen Kommunikationsanwendungen werden solche verschiedenen Status vordefiniert angeboten. Es ist zu beachten, dass die Statusveränderung bzw. der Status selber als einen Spezialfall einer Nachricht zu betrachten ist. Somit gilt alles, was über Nachrichten beschrieben wird, auch für den Status.

Gelöst wird die Aufgabe durch eine Erfindung mit den Merkmalen der Ansprüche.

Insbesondere handelt es sich um ein Verfahren und ein mobiles Endgerät zum einfachen Auslösen von voreingestellten Nachrichten an automatisch erkannte Empfänger über automatisch erkannte Kommunikationswege, die durch Kommunikationsanwendungen genutzt werden, die unterschiedliche Kommunikationsdienste implementieren, auf dem mobilen Endgerät, wobei das mobile Endgerät eine Vielzahl von Kommunikationsanwendungen unterstützt. Hierbei ist zu beachten, dass die Kommunikationswege sowohl paketorientierte Netzwerke als auch verbindungsorientierte Netzwerke sein können, die unterschiedliche Dienste anbieten. Die Kommunikationswege sind dabei nicht nur auf die untersten physikalischen Schichten begrenzt, sondern erstrecken sich ebenfalls auf die Ebene der Anwendungsprotokolle. Somit sind als Kommunikationswege sowohl die Netzwerktechnologie als auch die Anwendungsprotokolle zu betrachten. Bei den Anwendungsprotokollen kann es sich um Protokolle handeln, die bei Messenger verwendet werden, bei SMS-Diensten, Sprachdiensten, bei VoIP-Diensten, bei Nachrichtendiensten (E-Mail), bei gemischten Diensten wie Skype, Facebook, Whatsapp, Multimediadiensten, Video-Diensten, etc. Es versteht sich, dass diese Liste nicht abschließend ist, sondern die häufig verwendeten Dienste auflistet, die Benutzer verwenden, um mit anderen Personen oder Anwendungen zu kommunizieren. Um diese Dienste bereitzustellen, weist in der Regel ein mobiles Endgerät eine Reihe von Anwendungen auf, die die Dienste auf dem mobilen Endgerät bereitstellen, wobei sich ein Großteil der eigentlichen Logik der Dienste im Internet befindet. Das mobile Endgerät stellt in der Regel nur ein Frontend bereit, das Zugriff auf diese Dienste bereitstellt. Dieses Frontend verwendet ein bestimmtes Protokoll (Anwendungsprotokoll), um mit diesen Diensten im Hintergrund zu kommunizieren. Dabei greifen diese Protokolle auf unterschiedliche Netzwerktechnologien zu. In der Regel handelt es sich um paketorientierte Dienste wie IP-Dienste. Es sind jedoch auch Telefondienste denkbar, die verbindungsorientiert sind, so dass hierfür ein anderes Netzwerk verwendet werden muss.

Das Verfahren umfasst das Bereitstellen einer physikalischen Taste oder eines Icons auf dem Display, um eine voreingestellte Nachricht durch Berühren auszulösen. In einer bevorzugten Ausführungsform können unterschiedliche Arten von Tasten bereitgestellt werden, die mit unterschiedlichen Nachrichten verknüpft sind. So kann zum Beispiel eine Nachricht bedeuten "Ich bin für eine längere Zeit nicht mehr erreichbar, und werde mich daher zurückmelden, wenn ich wieder erreichbar bin." Eine alternative Taste kann hingegen sagen, "dass man für die nächsten 5 Minuten nicht erreichbar sein wird und sich nach diesem Zeitraum wieder meldet". Der Benutzer kann somit durch Auswahl des Icons eine definierte Nachricht generieren, die den Kommunikationspartner über den aktuellen Status der Verbindung informieren soll. Die Taste bestimmt somit den Inhalt der Nachricht. Durch diesen Ansatz kann sichergestellt werden, dass durch das Auswählen einer bestimmten Taste oder eines Icons auf dem berührungsempfindlichen Bildschirm eine bestimmte Nachricht erzeugt wird. Die verschiedenen Auslöser können auch für weitere verschiedene Optionen stehen. Zum Beispiel kann eine Taste nur Nachrichten an bestimmte Empfänger senden, eine andere Taste Nachrichten an andere Empfänger. Auch ist es denkbar, dass die Tasten für bestimmte Situationen stehen, in denen sich die Person befindet, wodurch der Text oder andere Optionen bestimmt werden. So können das Verlassen/Betreten eines Zuges oder Flugzeugs, eine schwache Batterie z.B. Situationen sein, in denen sich die Person befindet. Weitere Optionen werden weiter unten aufgelistet (z. B. Kommunikationswege und Zeitraum der letzten Kommunikation).

Nach dem Auslösen der Taste oder des Icons, stellt das mobile Endgerät alle Kommunikationswege und Kommunkationsempfänger fest, über die und an die in einen definierten vorhergehenden Zeitraum kommuniziert wurde. In der Regel wird geprüft, an welche Teilnehmer über welche Dienste in den letzten 3-10 Minuten kommuniziert wurde. Der Zeitraum ist natürlich variabel und kann entsprechend eingestellt werden. In der Regel wird der Zeitraum für unterschiedliche Dienste unterschiedlich definiert. Für Telefonanrufe bzw. aktive Sprachanrufe wird nur zu berücksichtigen sein, ob ein Anruf noch in den letzten Sekunden aktiv war oder ob dieser bereits beendet wurde. Für Kurznachrichtendienste ist der Zeitraum natürlich entsprechend anders gelagert. Für E-Mail-Dienste kann auch die Häufigkeit der Kommunikation in den letzten Minuten eine Rolle spielen. Sollte ein häufiger Austausch von E-Mails an bestimmte Partner registriert worden sein, so kann an einen solchen E-Mail-Partner eine entsprechende Nachricht gesendet werden. Sollte hingegen nur eine eingetroffene E-Mail vorhanden sein, so wird diese anders behandelt. Maßgeblich ist, ob festgestellt werden kann, ob eine Kommunikation zwischen den Partnern existiert. Als Kommunikation ist ein reger Austausch von Nachrichten in beide Richtungen in einem bestimmten Zeitraum zu betrachten. Es kommt somit einerseits auf die Häufigkeit des Nachrichtenaustauschs an und andererseits auf den Zeitraum, in dem dieser Austausch stattfand. Ein Nachrichtenaustausch umfasst dabei das Senden und Empfangen von Nachrichten.

Nachdem eine solche Kommunikation über eine Vielzahl von Kanälen festgestellt wurde, werden vordefinierte Nachrichten über alle Kommunikationswege an die Empfänger, die in dem definierten vorhergehenden Zeitraum aktiv waren bzw. mit denen der Anwender kommuniziert hat, gesendet.

In einer bevorzugten Ausführungsform sind die Nachrichten nach einem oder mehreren der folgenden Kriterien konfigurierbar:
Text der Nachricht, Art des Kommunikationsweges, Art des Auslösens, Art der Kommunikationsanwendung, Empfänger, Zeitraum der letzten Kommunikation, Uhrzeit, Datum.

Diese Liste ist nicht abschließend, weitere Alternativen sind denkbar.

So ist es zum Beispiel denkbar, dass bei einem Telefongespräch eine andere Nachricht an den Teilnehmer übermittelt wird als bei einem Nachrichtendienst. Auch ist es möglich, in Abhängigkeit der Person, mit der kommuniziert wird, eine unterschiedliche Nachricht aufzusetzen. Die Nachricht kann bei unbekannten Personen förmlicher sein, wobei die Nachricht bei bekannten Personen persönlicher ausgebildet ist. Die Art des Auslösens ist insoweit zu verstehen, dass es unterschiedliche Tasten bzw. Icons geben kann, die unterschiedliche Arten von Nachrichten oder andere Optionen auslösen. So ist es möglich festzulegen, dass das Auslösen durch ein bestimmtes Icon eine Nachricht generiert, die den Inhalt hat, dass man sich in 5 Minuten wieder zurückmelden wird. Eine andere Nachricht kann ausdrücken, dass man sich am nächsten Tag zurückmelden wird. Eine weitere alternative Nachricht kann ausdrücken, dass aufgrund einer sich leerenden Batterie nicht klar ist, wann man sich zurückmeldet. Es ist somit eine Vielzahl von möglichen Nachrichten, deren Inhalt spezifisch ist, denkbar. Die aufgeführte Liste stellt lediglich mögliche Beispiele dar und ist nicht abschließend zu verstehen. Ferner ist es möglich, den Zeitraum der Kommunikation für die unterschiedlichen Kommunikationsdienste, innerhalb dessen eine Kommunikation stattgefunden haben muss, festzulegen. Für einen Telefonanruf ist dieser Zeitraum deutlich kürzer als für einen Nachrichtendienst. Der Zeitraum ist somit spezifisch vom Kommunikationsdienst abhängig, weitere Abhängigkeiten sind jedoch nicht ausgeschlossen.

In einer bevorzugten Ausführungsform ist eine Anwendung auf dem mobilen Endgerät installiert, die die Kommunikationswege überwacht, und die das Auslösesignal empfängt, um die Nachrichten zusammenzustellen, um diese über die Kommunikationswege zu senden. Bei dieser Anwendung kann es sich um einen Proxy handeln, der zwischen die Kommunikationsanwendungen und die Serverdienste geschaltet ist. Die Anwendung kann zu verschiedenen Anteilen auf dem mobilen Endgerät selbst laufen bzw. nur ein Frontend darstellen, wobei die eigentliche Logik im Internet abläuft. Auch kann es sich um ein Programm handeln, das dem Netzwerkverkehr lauscht und durch das Lauschen anhand der Protokollart feststellen kann, mit wem kommuniziert wird und in welcher Form. Es ist auch denkbar, dass die Anwendung mit den Kommunikationsdiensten kommuniziert, um die notwendigen Informationen zu erlangen. So kann eine Schnittstelle zu den Kommunikationsanwendungen auf dem mobilen Gerät vorhanden sein, über die die notwendigen Informationen erlangt werden. Basierend auf diesen Informationen ist die Anwendung dann in der Lage, nach dem Auslösen der Taste bzw. des Icons eine entsprechende Nachricht über den Kommunikationsweg selbstständig zu senden.

In einer alternativen Ausführungsform ist eine Anwendung auf dem mobilen Endgerät installiert, die das Auslösesignal empfängt, um über eine Schnittstelle der Kommunikationsanwendungen diese aufzufordern, die Nachricht zu senden. Hierbei bedarf es einer entsprechenden Programmierung der Kommunikationsanwendung, so dass diese durch eine dritte Anwendung ferngesteuert werden kann. Die Verschaltung kann so ausgebildet sein, dass lediglich ein Signal an die Kommunikationsanwendung übermittelt wird, dass eine entsprechende Nachricht abgesendet werden soll. Die gesamte Logik wäre dann in der Kommunikationsanwendung gekapselt. Die Schnittstelle kann jedoch auch so ausgebildet sein, dass die Kommunikation durch die Anwendung über einen bestimmten Zeitraum überwacht werden kann, die dann auch den Inhalt der Nachricht, die Kommunikationspartner und ggf. weitere Optionen bestimmen kann, die dann an die Kommunikationsanwendung übermittelt werden, um die Nachricht an den Kommunikationspartner zu übermitteln. Es kann somit ein gleitender Übergang der Logik zwischen der Anwendung, die das Auslösesignal der Taste oder des Icons empfängt, und der Kommunikationsanwendung gegeben sein.

Es gibt somit die Möglichkeit, dass die Anwendung, die das Auslösesignal empfängt, zusätzlich noch die Nachricht selber oder weitere Optionen über die Schnittstelle der Kommunikationsanwendung übergibt oder dass die Kommunikationsanwendung selber Einstellungen erlaubt, die Regeln festzulegen, wie die Anwendung zu reagieren hat, wenn ein entsprechendes Auslösesignal über die Schnittstelle erlangt wird.

In einer möglichen Ausführungsform kann die Anwendung eine Nachricht, die einen Status darstellt, an die Kommunikationsanwendung senden, aus dem ersichtlich ist, dass eine weitere Kommunikation momentan nicht möglich ist. Einige Anwendungen erlauben die Einstellung eines Status, aus dem ersichtlich ist, ob der Empfänger bereit ist, eine Nachricht zu empfangen oder nicht. So gibt es den Status "momentan nicht erreichbar", "arbeite gerade", "bin online" etc.

In der bevorzugten Ausführungsform wird durch das einmalige Auslösen über eine Vielzahl von Kommunikationswegen die Nachricht übermittelt. Das heißt über die unterschiedlichsten Kommunikationswege, die durch unterschiedliche Kommunikationsdienste genutzt werden, wird eine Vielzahl von Nachrichten gesendet, so dass Benutzer, die in Eile sind, alle Kommunikationen schlagartig unterbrechen bzw. beenden können.

Am mobilen Endgerät wird ein Auslöser angeboten, zum Beispiel eine Taste oder ein Icon auf dem Bildschirm. Dieser Auslöser ist einfach zu bedienen, kann also schnell bedient werden, wenn die Wartezeit abrupt endet. Dieser Auslöser veranlasst, dass automatische Nachrichten an die derzeitigen Kommunikationspartner gesendet werden. In diesen Nachrichten wird den Kommunikationspartnern mitgeteilt, dass der Anwender die Kommunikation unterbrechen muss (z. B. "Ich muss aufhören. Viele Grüße.").

Dadurch kann der Anwender schnell allen Kommunikationspartnern mitteilen, dass er die Kommunikation beenden muss.

Einfacher Auslöser bei einem mobilen Endgerät, mit dem der Anwender veranlasst, dass Nachrichten an Kommunikationspartner geschickt werden.

Dies erfolgt automatisch, d.h.:
- Die Nachrichten wurden bereits vorher festgelegt und gespeichert, müssen also nicht zum Zeitpunkt der Kommunikation für die Kommunikation neu erstellt werden.
- Die Empfänger und Kommunikationswege müssen nicht vom Anwender per Hand ausgewählt werden, sondern es werden die derzeitigen Kommunikationspartner und Kommunikationswege verwendet. Wer die derzeitigen Kommunikationspartner und Kommunikationswege sind, wird automatisch erkannt.

Figurenbeschreibung:
im Folgenden werden die Figuren beschrieben, auf die in der folgenden Beschreibung Bezug genommen wird:

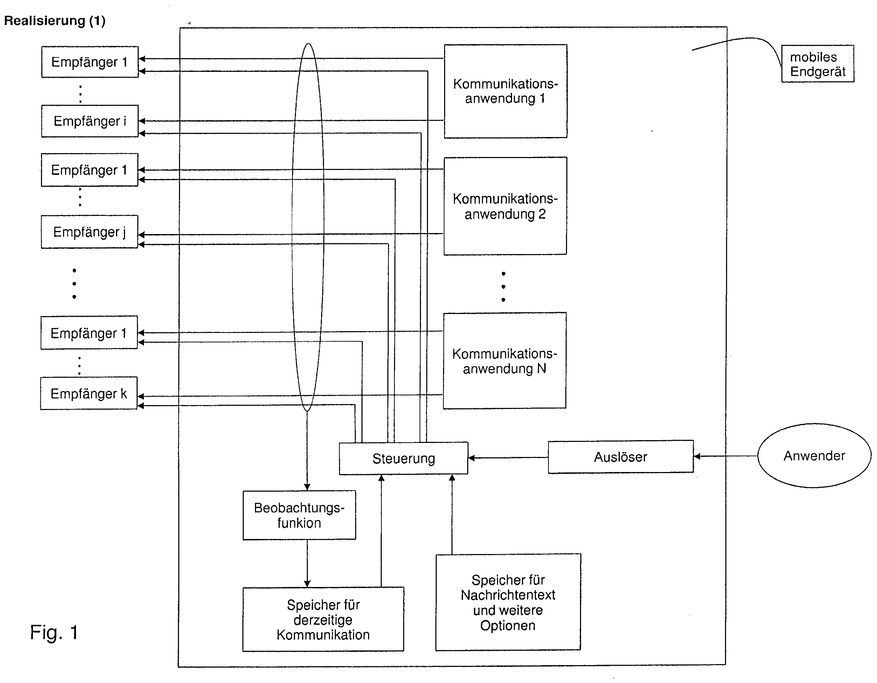

- Figur 1: zeigt eine erste Implementierung des Verfahrens, bei dem eine Überwachung der Kommunikation der Anwendungen erfolgt;

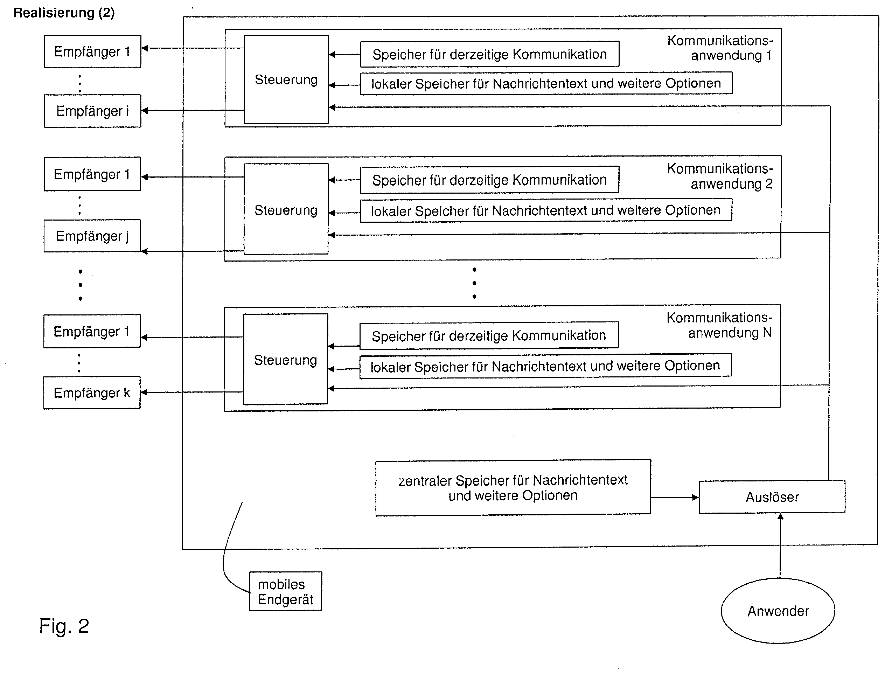

- Figur 2: zeigt eine zweite Implementierung des Verfahrens, bei dem eine Kommunikation mit den Kommunikationsanwendungen erfolgt, die gesteuert werden.

### Beschreibung der Ausführungsform

Im Folgenden werden zwei Möglichkeiten zur Realisierung des Verfahrens beschrieben, wobei diese nicht limitierend zu betrachten sind.

Auch wenn in beiden Figuren die Ausführung so dargestellt ist, dass der Speicher und die gesamte Logik auf dem mobilen Endgerät abläuft, kann das mobile Endgerät auch nur als Frontend dienen und die Logik und der Speicher können im Internet ablaufen. Dabei sind verschiedene Abstufungen möglich.

### Realisierung (1):

Sämtliche Kommunikationen des mobilen Endgeräts werden durch eine Beobachtungsfunktion beobachtet und die Empfänger und Kommunikationswege der letzten x Minuten oder Sekunden (diese Zeit muss festgelegt werden, x stehtfür eine rationale Zahl) gespeichert. Die Beobachtungsfunktion speichert die entsprechende Kommunikation in einem Speicherbereich. Wenn der Anwender den Auslöser bedient, wird die Ende-Nachricht an alle gespeicherten Empfänger über die gespeicherten Kommunikationswege gesendet. Dabei werden der oder die voreingestellten Nachrichtentexte und ggf. weitere Optionen (siehe unten) berücksichtigt. Der Auslöser greift auf eine Steuerung zu, wobei die Steuerung wiederum einen Zugriff auf den Speicher für die Kommunikation der letzten Minuten besitzt und einen Zugriff auf einen Speicher hat, in dem der Nachrichtentext und weitere Optionen für bestimmte Anwendungen gespeichert ist. Die Steuerung übernimmt dann die Aufgabe, in die Kommunikationswege einzugreifen und entsprechende Nachrichten direkt an den Empfänger bzw. den Dienst zu senden. Die Steuerung hat somit Zugriff auf das Kommunikationsprotokoll der Kommunikationsanwendungen 1 bis N (wobei N eine natürliche Zahl ist) .

### Realisierung (2):

Bei der zweiten Ausführungsform besitzen die Kommunikationsanwendungen auf dem mobilen Endgerät eine Schnittstelle für den Auslöser. Wenn der Anwender den Auslöser bedient, sendet der Auslöser an alle diese Schnittstellen die Mitteilung, dass diese jetzt eine Ende-Nachricht an die derzeitigen Kommunikationspartner senden sollen. Hierbei ist zu beachten, dass die Kommunikationsanwendungen 1 bis N (N steht für eine natürliche Zahl) einen Speicher für die derzeitige Kommunikation besitzen (in der Regel konfigurierbar für einen bestimmten Zeitraum von Sekunden bis Minuten) und einen weiteren Speicher für einen oder mehrere spezifische Nachrichtentexte und weitere Optionen. Somit ist es möglich, pro Kommunikationsanwendung eine entsprechende Steuerung innerhalb der Kommunikationsanwendungen individuell vorzunehmen. Der Auslöser greift dann über eine Schnittstelle auf die Kommunikationsanwendungen zu und es wird eine entsprechende Nachricht an die Empfänger 1 bis K abgesendet. Es ist auch denkbar, dass ein zentraler Speicher für Nachrichtentexte und weitere Option vorhanden ist, der entweder die lokalen Speicher überschreibt, oder falls ein lokaler Speicher nicht vorhanden ist bzw. keine Texte oder andere Optionen in diesem, so werden die Texte bzw. andere Optionen vom zentralen Speicher vorgeben. In diesem Fall werden über die Schnittstelle der entsprechende Nachrichtentext und die weiteren Optionen an die Kommunikationsanwendungen 1 bis N (N ist eine natürliche Zahl) übermittelt.

Der Auslöser kann viele Optionen bereits voreingestellt haben, diese können aber auch durch den Anwender beeinflusst werden. Dies sollte er sinnvollerweise bereits vor dem eigentlichen Auslösen durchführen, da sonst der Zeitgewinn durch den einfach zu bedienenden Auslöser verloren geht. Verschiedene Optionen können auch durch verschiedene Auslöser ausgewählt werden.

Mögliche Optionen sind zum Beispiel:
- Der Text der Nachrichten kann voreingestellt sein, kann aber auch vom Anwender geändert werden.
- Der Auslöser kann alle Kommunikationswege einschließen, der Anwender kann aber auch einige Kommunikationswege auswählen bzw. ausschließen.
- Der Auslöser kann alle Empfänger einschließen, der Anwender kann aber auch einige Empfänger auswählen bzw. ausschließen.
- Der Auslöser kann die letzten Kommunikationsverbindungen einer festgelegten Zeit bedienen, der Anwender kann diese Zeit aber auch selbst festlegen.

Die Voreinstellungen können je nach Tageszeit oder Aufenthaltsort variieren.

Bei den Optionen sind auch beliebige Kombinationen möglich. Zum Beispiel soll ein Empfänger A nur bei E-Mail-Kommunikation benachrichtigt werden oder bei einer SMS sollen die letzen 3 Minuten berücksichtigt werden oder ab 20 Uhr soll die Nachricht mit "Ich melde mich morgen." enden oder Empfänger aus dem persönlichen Adressbuch des Anwenders erhalten eine persönlicher formulierte Nachricht als andere Empfänger.

Bei der Realisierung (2) gibt es zwei Wege, wie die Optionen umgesetzt werden können:
- Zum einen kann der Anwender lokal in jeder Kommunikationsanwendung die Optionen einstellen. Er kann zum Beispiel bei einem E-Mail-Programm einstellen, dass die Kommunikationspartner der letzten 3 Minuten benachrichtigt werden sollen, bei einem anderen E-Mail-Programm die der letzten 5 Minuten und bei einem SMS-Programm die letzten 2 Minuten.
- Zum anderen können diese Optionen zentral beim Auslöser gespeichert werden und dann an die Kommunikationsanwendung übertragen werden, wenn dieser die Aufforderung zum Nachrichtenversand über die Schnittstelle an die Kommunikationsanwendungen sendet. Dafür muss die Schnittstelle entsprechend definiert werden, damit nicht nur die Aufforderung zum Nachrichtenversand, sondern auch diese Attribute übertragen werden können.

Hier sind Kombinationen möglich, das heißt einige Optionen können direkt bei der Kommunikationsanwendung konfiguriert werden, andere können bei der Aufforderung zum Nachrichtenversand übertragen werden.

Eine Sonderrolle spielt ein Kommunikationspartner, mit dem der Anwender mündlich telefoniert. Der Auslöser kann hier u.U. nicht den exakt gleichen Kommunikationsweg verwenden. Er kann aber veranlassen, dass dem Kommunikationspartner über den Dienstkanal an die gleiche Rufnummer eine SMS gesendet wird. Es ist jedoch auch denkbar, dass eine Sprachnachricht übertragen wird, bei der es sich um eine synthetische Sprachwiedergabe handelt.

## Patentansprüche

1. Verfahren zum einfachen Auslösen von voreingestellten Nachrichten an automatisch erkannte Empfänger über automatisch erkannte Kommunikationswege, die durch Kommunikationsanwendungen genutzt werden, die unterschiedliche Kommunikationsdienste auf einem mobilen Endgerät implementieren, wobei das mobile Endgerät eine Vielzahl von Kommunikationsanwendungen unterstützt:
- Bereitstellen einer physikalischen Taste oder eines Icons auf dem Display, um eine voreingestellte Nachricht durch Berühren durch einen Anwender auszulösen;
- Nach dem Auslösen der physikalischen Taste oder des Icons, Feststellen aller Kommunikationswege und Kommunikationsempfänger, über die und an die in einem definierten vorhergehenden Zeitraum kommuniziert wurde, wobei der Zeitraum für unterschiedliche Kommunikationsanwendungen unterschiedlich definierbar ist;
- automatisches Senden einer vordefinierten Nachricht über alle Kommunikationswege an die Empfänger, die in dem vorhergehend definierten Zeitraum aktiv waren, insbesondere über Kommunikationswege über die der Anwender eine Nachricht gesendet hat.

2. Das Verfahren nach dem vorhergehenden Anspruch, wobei das Versenden der Nachrichten konfigurierbar ist nach einem oder mehreren der folgenden Kriterien:
Nachrichtentext, Art des Kommunikationswegs, Art des Auslösens, Art der Kommunikationsanwendung, Empfänger, Zeitraum der letzten Kommunikation, Uhrzeit, Datum.

3. Das Verfahren nach einem oder mehreren der vorhergehenden Ansprüche, wobei eine Anwendung auf dem mobilen Endgerät installiert ist, die die Kommunikationswege überwacht, und die das Auslösesignal empfängt, um die Nachrichten zusammenzustellen, um diese über die Kommunikationswege zu senden.

4. Das Verfahren nach einem oder mehreren der vorhergehenden Ansprüche, wobei eine Anwendung auf dem mobilen Endgerät installiert ist, die das Auslösesignal empfängt, um über eine Schnittstelle mit den Kommunikationsanwendungen, diese aufzufordern, die Nachricht zu senden.

5. Das Verfahren nach dem vorhergehenden Anspruch, wobei die Anwendung, die das Auslösesignal empfängt, zusätzlich noch die Nachricht selber oder weitere Optionen über die Schnittstelle der Kommunikationsanwendung übergibt oder wobei die Kommunikationsanwendung selber Einstellung erlaubt, die Regeln festzulegen, wie die Kommunikationsanwendung zu reagieren hat, wenn ein entsprechendes Auslösesignal über die Schnittstelle erlangt wird.

6. Das Verfahren nach einem oder mehreren der vorhergehenden zwei Ansprüche, wobei die Anwendung durch die Nachricht einen Status an die Kommunikationsanwendung sendet, aus dem ersichtlich ist, dass eine weitere Kommunikation momentan nicht möglich ist bzw. eine andere Statusänderung, die die Kommunikationsanwendung vordefiniert bereitstellt.

7. Das Verfahren nach einem oder mehreren der vorhergehenden Ansprüche, wobei durch das einmalige Auslösen über eine Vielzahl von Kommunikationswegen die Nachricht übermittelt wird.

8. Das Verfahren nach einem oder mehreren der vorhergehenden Ansprüche, wobei bei einer Telefonverbindung diese nach einer sprachlichen Ansage der Nachricht beendet wird und/oder eine Nachricht per SMS gesendet wird, nachdem die Telefonverbindung beendet wurde.

## Claims

1. A method for easily triggering preset messages to automatically recognized recipients via automatically recognized communication paths used by communication applications implementing different communication services on a mobile terminal, wherein the mobile terminal supports a plurality of communication applications:
- Providing a physical key or icon on the display to trigger a preset message when touched by a user;
- After triggering the physical key or icon, determining all communication paths and communication receivers through which and to which communication was made in a defined preceding time period, the time period being differently definable for different communication applications;
- automatic sending of a predefined message via all communication paths to the recipients which were active in the precedingly defined period, in particular via communication paths via which the user sent a message.

2. The method according to the preceding claim, where the sending of the messages is configurable according to one or more of the following criteria:
Message text, type of communication path, type of triggering, type of communication application, recipient, period of last communication, time, date.

3. The method according to one or more of the preceding claims, wherein an application is installed on the mobile terminal which monitors the communication paths and receives the trigger signal to assemble the messages to send them over the communication paths.

4. The method according to one or more of the preceding claims, wherein an application is installed on the mobile terminal which receives the trigger signal to request the communication applications to send the message via an interface with the communication applications.

5. The method according to the preceding claim, wherein the application receiving the trigger signal additionally transmits the message itself or further options via the interface of the communication application or wherein the communication application itself allows setting the rules to determine how the communication application is to react when a corresponding trigger signal is obtained via the interface.

6. The method according to one or more of the preceding two claims, wherein the application sends a status to the communication application through the message, indicating that further communication is currently not possible, or another status change provided by the communication application in a predefined form.

7. The method according to one or more of the preceding claims, wherein the message is transmitted by the one-time triggering via a plurality of communication paths.

8. The method according to one or more of the preceding claims, wherein, in the case of a telephone connection, this is terminated after a voice message announcement of the message and/or a message is sent by SMS after the telephone connection is terminated.

## Revendications

1. Un procédé de déclenchement simple de messages prédéfinis à des récepteurs reconnus automatiquement via des voies de communication reconnues automatiquement utilisées par des applications de communication mettant en oeuvre différents services de communication sur un terminal mobile, dans lequel le terminal mobile prend en charge une pluralité d'applications de communication, comportant les étapes consistant à:
- fournir une clé physique ou une icône sur l'affichage pour déclencher un message prédéfini à la suite d'une saisie tactile par un utilisateur ;
- après l'activation de la clé physique ou de l'icône, déterminer toutes les voies de communication et tous les récepteurs de communication au travers desquels la communication a été effectuée dans une période précédente prédéfinie, la période étant définissable de manière différente pour différentes applications de communication ;
- transmettre automatiquement aux destinataires actifs durant la période définie précédemment un message prédéfini via toutes les voies de communication, notamment via des voies de communication sur lesquels l'utilisateur a envoyé un message.

2. Le procédé selon la revendication précédente, dans lequel l'envoi des messages est configurable selon un ou plusieurs des critères suivants:
un Texte du message, un type de voie de communication, un type de déclenchement, un type d'application de communication, un destinataire, une durée de la dernière communication, une heure, une date.

3. Le procédé selon une ou plusieurs des revendications précédentes, dans lequel une application est installée sur le terminal mobile qui surveille les voies de communication et qui reçoit le signal de déclenchement pour assembler les messages à envoyer sur les voies de communication.

4. Le procédé selon une ou plusieurs des revendications précédentes, dans lequel une application est installée sur le terminal mobile qui reçoit le signal de déclenchement pour demander aux applications de communication de transmettre le message via une interface avec les applications de communication.

5. Le procédé selon la revendication précédente, dans lequel l'application recevant le signal de déclenchement transmet en outre le message lui-même ou d'autres options via l'interface de l'application de communication, ou dans lequel l'application de communication elle-même permet de définir les règles déterminant comment l'application de communication va réagir suite à l'obtention d'un signal de déclenchement correspondant via l'interface.

6. Le procédé selon une ou plusieurs des deux revendications précédentes, dans lequel l'application envoie par le biais du message un statut à l'application de communication, indiquant qu'une communication ultérieure est actuellement impossible, comme encore tout autre changement de statut fourni par l'application de communication dans une forme prédéfinie.

7. Le procédé selon une ou plusieurs des revendications précédentes, dans lequel le message est transmis par le déclenchement ponctuel sur une pluralité de voies de communication.

8. Le procédé selon l'une ou plusieurs des revendications précédentes, dans lequel, dans une connexion téléphonique, celle-ci est terminée après qu'une annonce vocale du message et/ou un message ait été envoyé par SMS après la fin de la connexion téléphonique.
